# EUROPEAN PATENT APPLICATION

(11) **EP 2 280 228 A1**
(43) Date of publication of application: **02.02.2011**
(21) Application number: 09163740.5
(22) Date of filing: 25.06.2009
(51) Int. Cl.: F24D 13/02, F24D 19/10

(54) **Active wall element, a wall heating system comprising such element, and a method of manufacturing a building**

(71) Applicant: Inca Heating Products, 2661 SK Bergschenhoek (NL)
(72) Inventor: Neeleman, Willem, 2661 SK Bergschenhoek (NL); Cox, Marcus, 6042 NZ Roermond (NL)
(74) Representative: DeltaPatents B.V.

(57) **Abstract**

The invention relates to an active wall element (1,10) comprising: i) a wall plate (10), and ii) a heating mat (1) being physically attached to the wall plate (10), the heating mat (1) comprising an electrically conductive polymer layer (2), the heating mat (1) being provided in thermal contact with at least one side of the wall plate (10), wherein the heating mat (1) comprises at least two electrodes (4) configured for enabling current running through the electrically conductive polymer layer (2) to heat the wall plate (10) in operational use. The invention further relates to a wall heating system comprising: i) the active wall element (1,10) of the invention, and ii) a driver unit (DRVR) connected to the at least two electrodes (4) and being configured for steering the current through the electrically conductive polymer layer (2). The active wall element, is an alternative for the existing passive wall elements, and is configured for heating a space in a building (PH). Furthermore, the active wall element is easy to mount. A special embodiment of the wall heating system aims at reducing the response time of the system by using a smart driver unit. The invention also relates to various applications of such a wall heating system, and to a method of manufacturing a building, in which active wall elements of the invention are used.

## Description

### FIELD OF THE INVENTION

The invention relates to an active wall element and to a wall heating system comprising such element. The invention further relates to a wall comprising such wall heating system, and to a building comprising such wall. The invention also relates to a method of manufacturing a building, wherein such wall heating system is provided.

### BACKGROUND OF THE INVENTION

Wall plates are known in particular from the field of private house and building construction. Known examples of wall plates that are used in this field are plasterboard, cardboard/pasteboard, and combinations of those, such as gypsum plasterboard. Typically such wall plates are used in so-called metal-stud wall systems of which two main variants exist. First of all, there is the partition wall (dividing wall) in which the wall plates are mounted on opposing sides of metal-studs. Thermal insulation and/or sound insulation material can be provided in between the wall plates. A second variant concerns the cladding wall/double wall in which the wall plates are mounted on one side of metal-studs which have been mounted on a further wall (for example a concrete or a brick wall). Similarly, thermal insulation and/or sound insulation material can be provided in the space between the wall plates and the further wall. More details on these wall variants are given later in this description.

Wall heating devices are known. One such example is the MAGNUM™ Millimat described in:
http://www.magnumheating.com/uploads/media/MAGNUM_MILLIMAT_installatie_NL _2008.pdf. This wall heating device comprises a mat in which a heating wire is laid out in a meander-like fashion. The mat can be provided underneath floor tiles or wall tiles. In operational use a current is steered through the heating wire which heats up the heating mat. Subsequently, the mat heats up the tiles.

Floor heating devices are known. WO01/056333 A1 discloses a device for floor heating comprising a bendable, electrically conductive, thermoplastic mat, adapted for division into lengths and mounting of these lengths side by side underneath a floor. The device is provided with at least two electrodes arranged along each side edge of the mat each, to which electrodes a current is connectable. The current is conducted through the device, which heats up and emits heat. The mat comprises a material composition whose volume resistivity increases with the increase of the temperature of the material composition. The electrodes are threadlike and the material composition comprises a semi-crystalline polymer, whose crystalline melting point exceeds the normal working temperature of the device but are below 99°C and whose softening temperature (Vicat) is in the range of 45-70°C, and an electrically conductive filler material. This results in that the device may be driven by mains voltage and that the volume resistivity of the material composition substantially increases already at temperatures below 30°C, whereby the device is self-regulating regarding temperature and power in normal working temperatures for floor heating.

### SUMMARY OF THE INVENTION

The invention is defined by the independent claims. The dependent claims define advantageous embodiments.

In a first aspect, the invention relates to an active wall element comprising:
- a wall plate, and
- a heating mat being physically attached to the wall plate, the heating mat comprising an electrically conductive polymer layer, the heating mat being provided in thermal contact with at least one side of the wall plate, wherein the heating mat comprises at least two electrodes configured for enabling current running through the electrically conductive polymer layer to heat the wall plate in operational use.

The inventor identified a need for an active wall element, which can be sold as an alternative for the existing (passive) wall elements and which is configured for heating a space in a building. The inventor further identified the need for an active wall element, which is easy to mount. Both needs are conveniently fulfilled with the active wall element in accordance with the first aspect of the invention. The active wall element, which is a combination of a wall plate (which may be a conventional one in an embodiment) and the heating mat, which has been attached to the wall plate conveniently, can replace the conventional wall plate. The mounting of the active wall element is done in a similar manner as the conventional wall plate, except for the fact that during or after mounting of the element the electrodes are to be connected to an electric system at least comprising a driver circuit. Nevertheless, the active wall element in accordance with the invention can be sold as a separate entity, i.e. a building part for a building constructor.

It must be noted that in the earlier-mentioned Millimat™ system the current is confined within the heating wire and does not run through the mat. The material of the Millimat™, in which the wire is embedded, is not electrically conductive).

In an embodiment of the active wall element in accordance with the invention the heating mat substantially covers the wall plate. This embodiment is advantageous, because the more the heating mat covers the wall plate, the better the thermal coupling between both parts and the more efficient the temperature of the active wall element can be controlled. Preferably, at least 50% of the area of wall plate is covered with the heating mat, preferably at least 80%, and even more preferably at least 90%.

In an embodiment of the active wall element in accordance with the invention the wall plate has a width in the range of 300mm to 1200mm and a length in the range of 1300 to 5200mm.

In an embodiment of the active wall element in accordance with the invention the wall plate has a width of about 600mm and a length of about 2600mm. The dimensions of the wall plate in this embodiment comply with most commonly used wall plate dimensions in The Netherlands.

In an embodiment of the active wall element in accordance with the invention the heating mat has a width in the range of 250mm to 1000mm and a length in the range of 1000mm to 4000mm. Preferably, the heating mat has a width of 500mm and a length of 2000mm.

In an embodiment of the active wall element in accordance with the invention the heating mat comprises at least a further electrode configured for supplementing or cooperating with the two electrodes for enabling current running through the electrically conductive polymer layer to heat the wall plate in operational use. This embodiment is advantageous because it renders lower driving voltages possible. A shorter distance between the electrodes means smaller resistance of the heating mat and thus a higher current at a predefined voltage, i.e. more power is delivered to the heating mat.

In an embodiment of the active wall element in accordance with the invention the electrodes are arranged on longest sides of the heating mat.

In a further variation of last-mentioned embodiment of the active wall element in accordance with the invention the minimum distance between said electrodes is 490mm.

An embodiment of the active wall element in accordance with the invention further comprises a reflective foil provided over the heating mat for reflecting heat radiation of the heating mat towards the wall plate. The more heat radiation is reflected back to the wall plate the more efficient the wall plate is heated, and the better the space (that is bounded by the wall element) is heated.

An embodiment of the active wall element in accordance with the invention the reflective foil comprises material selected from a group comprising: aluminum (with extreme low emissivity), silver, gold, and other suitable metals. The advantage of this embodiment is that these materials have good heat radiation reflection properties, which is increases the efficiency of the active wall element when used in a wall heating system.

In a second aspect, the invention relates to a wall heating system comprising:
- the active wall element as claimed in any one of the preceding claims, and
- a driver unit connected to the at least two electrodes and being configured for steering the current through the electrically conductive polymer layer.

The addition of the driver unit to the active wall element of the invention results in a completely functional wall heating system, which may be built into a building or a house.

In an embodiment of the wall heating system in accordance with the invention the driver unit is configured for, after activation of the wall heating system, providing an input power to the heating mat, which is, at least during a predefined amount of time, larger than a steady-state input power corresponding with an equilibrium situation wherein a temperature of the heating mat has settled on a desired value. This embodiment is very advantageous, because the response time (=temperature settling time) of the heating system can be significantly shortened. With response time it is meant that the power that is transferred by the heating mat (i.e. transferred power) reaches about the same level as the input power. The higher value of the input power quickly after activation of the system will cause the temperature of the heating mat (and the wall plate to which it has been thermally coupled) to rise rapidly and thereby also the transferred power increases rapidly. Once the desired value of the temperature is approached the input power level may be decreased towards a steady-state level that is necessary to keep the temperature at the desired value. It must be noted that such input power control is rendered possible by the fact that the heating system is electrical which are much faster than, for example, heating systems that are based upon heat exchange between a wall plate and water, i.e. water has a large heat capacity which renders fast response of the system impossible.

In an embodiment of the wall heating system in accordance with the invention the driver unit is configured for providing, during the predefined amount of time, a peak input power, which is at least 50 times the stead-state input power, and preferably at least 100 times the steady-state input power, and which is even more preferably at least 150 times the steady-state input power. Experiments have shown that peak input power levels in accordance with this embodiment provide for response times below 1 minute. This figure must be compared with response times the known heating systems of typically 20 minutes.

In an embodiment of the wall heating system in accordance with the invention the driver unit is configured for determining an actual value of temperature of the heating mat, and the driver unit further comprises a controller for regulating the temperature towards the desired value of the temperature using the actual value. This embodiment constitutes a control system. Control systems provide for more accurate and flexible control of the temperature of the wall heating system.

In an embodiment of the wall heating system in accordance with the invention the driver unit further comprises a temperature sensor coupled to the controller and being arranged in thermal coupling with the heating mat for determining the actual value of the temperature. This is a convenient embodiment of the wall heating system, because the temperature sensor can be easily provided in thermal coupling with the heating mat, for example by gluing it on a back-side of the heating mat.

In an embodiment of the wall heating system in accordance with the invention the driver unit further comprises an impedance meter configured for measuring a resistance between the at least two electrodes of the heating mat to obtain a representative of the actual value of the temperature, and the controller is configured for deriving the actual value of the temperature from the representative using a stored resistance-versus-temperature dependency. This is a convenient embodiment of the wall heating system, because the resistance between the electrodes can be easily measured by determining actual values of the voltage and current. Conventional voltmeters and ampere meters can be used for this.

In an embodiment of the wall heating system in accordance with the invention the driver unit further comprises a pulse width modulator for regulating the input power by pulse width modulation of a voltage over the heating mat or a current through the heating mat. Pulse width modulation is a very convenient manner of varying the input power. More information on this embodiment is given in the detailed description.

An embodiment of the wall heating system in accordance with the invention further comprises a frame or a stud configured for being mounted to a further wall or ceiling, and the active wall element is attached to the frame or stud. In this embodiment the use of a frame or a stud makes the wall heating system of the invention comply more with existing wall building techniques. Preferably, the frame or stud comprises metal-studs. Such embodiment is fully compatible with the metal-stud wall systems as known from the prior art. Similar to the metal-stud walls of the prior art, in the invention two main variants of the metal-stud wall heating system are possible, i.e. a partition wall (dividing wall) or a cladding wall (double wall).

In an embodiment of the wall heating system in accordance with the invention the active wall element is mounted such that the heating mat located provided on an inner side of the wall plate, wherein the inner side is defined as the side of the wall plate which is not directly accessible when the wall plate is mounted to or as a wall. The arrangement in this embodiment is the most convenient/compatible configuration for in a building or a house. From the outside (standing in a room and looking at the wall) it looks as if nothing has changed. Furthermore, the wall plate is very suitable for absorbing and emitting radiation heat. Also, the wall plate is directly paintable or can be covered with wallpaper.

In a third aspect, the invention relates to a wall comprising the wall heating system. The invention is advantageously applied to walls, which in that case contribute to the heating of a space that is bound by those walls, i.e. the walls become active elements.

In a fourth aspect, the invention relates to a building comprising the wall. The invention is advantageously applied to buildings. Users of the building experience a higher level of comfort due to the invention.

In a fifth aspect, the invention relates to a driver unit for use in the wall heating system of the invention. Such driver unit may be sold to building constructors as a separate entity.

In a sixth aspect, the invention relates to a method of manufacturing a building comprising a room with a wall, the method comprising:
- providing the active wall element as claimed in any one of claims 1 to 4, or and
- mounting the active wall element to the wall for enabling heating of the room in operational use of the building. This method can be carried out by building constructors, handymen, and carpenters. The method may form part of a building process from scratch or of an upgrade process.

These and other aspects of the invention are apparent from and will be elucidated with reference to the embodiments described hereinafter.

### BRIEF DESCRIPTION OF THE DRAWINGS

In the drawings:
Fig. 1 a shows a cross-sectional view of a metal-stud cladding wall system in accordance with a first embodiment of the invention;
Fig. 1b shows a cross-sectional view of a metal-stud partition wall system in accordance with a second embodiment of the invention;
Fig. 2a shows a heating mat that can be used in the embodiments of Fig. 1 a and 1b;
Fig. 2b shows a cross-sectional view of the heating mat of Fig. 2a;
Fig. 3a shows the transient behavior of the transferred power of the heating mat in case the input power remains constant (after activation of the system);
Fig. 3b shows the transient behavior of the transferred power of the heating mat in case the input power is optimized (in accordance with the invention) for short response time of the transferred power (after activation of the system);
Fig. 4a shows a wall heating system in accordance with a third embodiment of the invention;
Fig. 4b shows a wall heating system in accordance with a fourth embodiment of the invention;
Fig. 4c shows a wall heating system in accordance with a fifth embodiment of the invention;
Fig. 4d shows a wall heating system in accordance with a sixth embodiment of the invention;
Figs. 5a and 5b illustrate the pulse width modulation principle, and
Fig. 6 shows which walls in a conventional room of a private house are suitable for being provided with the active wall element of the invention.

### List of reference numerals:

- 1: heating mat
- 2: electrically conductive polymer layer
- 3: side edge of heating mat
- 4: electrodes
- 5: electrically insulating layer
- 6: loosely engaged layer
- 7: cut end edges
- 8: insulating tape
- 9: ends of electrodes
- DE: electrode distance
- 10: wall plate
- S1: inner side
- 20: insulating material
- 50: metal-stud profile
- 51: free receiving area for a further wall plate
- 100: wall
- P: power
- t: time
- Pi: input power (power applied to the heating mat)
- Ptrnsfr: transferred power (power emitted from the heating mat to the environment, including wall plate
- Pmx: maximum value of input power (peak height)
- trsp: response time (time needed for temperature to settle at desired value)
- Pss: steady-state input power (after temperature settling to desired value)
- PS: power supply
- MI: mains input
- TR: transformer
- LVO: low-voltage output
- DRVR: driver unit
- THMSTR: thermistor
- FSE: fuse
- PWM: pulse width modulator
- SW: switching element
- µC: microcontroller (controller)
- TS: temperature sensor
- A: ampere meter
- PW: pulse width
- PH: private house
- WII: wall
- LR: living room
- KTCHN: kitchen
- STRS: stairs
- TLT: toilet
- EH: entrance hall

### DETAILED DESCRIPTION OF THE PREFERRED EMBODIMENT

The invention aims at providing, in a first aspect, an active wall element and, in a second aspect, a wall heating system comprising such element. The inventors have realized that there is a need for an active wall element, which can be sold as an alternative for the existing passive wall elements, and which is configured for heating a space in a building. The inventor further identified a need for an active wall element which is easy to mount, i.e. which is compatible with existing building techniques. Both needs are satisfied with the active wall element in accordance with the first aspect of the invention, which active wall element comprises a wall plate and a heating mat thermally coupled to the wall plate. Such active wall element can be sold as a separate entity. The wall heating system of the invention combines the active wall element with a driver unit which is configured for heating the heating mat. In an advantageous embodiment of the wall heating system the driver unit is made "smart" in the sense that is adapts the input power such that the response time of the system is significantly shortened, i.e. below 1 minute. This effect is achieved by making the input power, at least during a predefined amount of time after activation of the wall heating system, higher than a steady-state input power which corresponds with an equilibrium situation wherein a temperature of the heating mat has settled on a desired value. The result is that the desired temperature is reached sooner, which is a convenient property of an active wall heating system in accordance with the invention, i.e. it renders accurate and flexible temperature control of the space. Here it must be noted that existing wall heating systems have very slow response times, in order of 20 minutes. The invention further provides applications of the wall heating system, and a method of manufacturing a building using such wall elements and wall heating systems.

In order to facilitate the discussion of the detailed embodiments a few expressions are defined hereinafter.

Throughout this description the term "physical attaching" should be interpreted as to include all forms of attaching, such as gluing, sewing, nailing, screwing, bonding, etc.

Throughout this description the term "wall" should be widely interpreted as to include vertical walls, tilted walls, tilted ceilings, flat ceilings and even curved walls/ceilings.

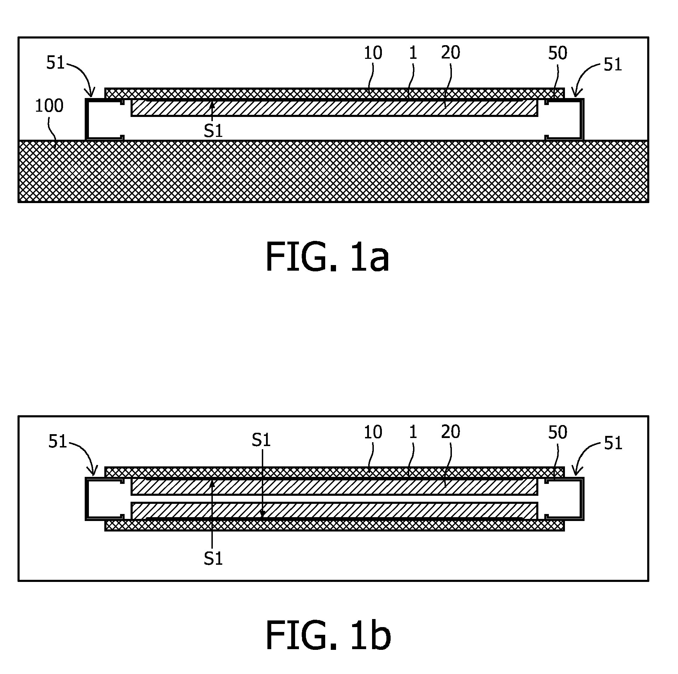

Figs. 1 a and 1 b serve to illustrate two major applications where the invention can be applied, i.e. metal-stud wall. Millions of square meters of such walls are manufactured every year. Fig. 1 a shows a cross-sectional view of a metal-stud cladding wall system in accordance with a first embodiment of the invention. Metal-stud cladding walls are often used on concrete walls 100. Conventionally, a metal-stud profile 50 is first mounted on the concrete wall 100. Subsequently, isolation material 50 is typically provided within the metal-stud profile 50 (i.e. 50mm glass wool or BIueDec™). Finally a wall plate 10 is typically mounted on the metal-stud profile 50. This mounting is typically done such that free receiving areas 51 remain onto which further wall plates (not shown) can be mounted. The most commonly used materials for the wall plate 10 are plasterboard, cardboard/pasteboard, and combinations of those, such as gypsum plasterboard. The most commonly used thickness for the wall plates are 12,5mm and 15mm. Common dimensions of the wall plates are 600mm * 2600mm.

The invention provides, in a first aspect, for an alternative for the wall plate 10, i.e. the wall plate is provided with a heating mat 1 turning the wall plate 10 into an active wall element. The heating mat 1 is physically attached to the wall plate 10, but there may be something between the wall plate 10 and the heating mat 1, for example a glue layer (not shown). In any case the heating mat 1 is provided such that it is thermally coupled to the wall plate 10. Preferably, the heating mat 1 is provided on an inner side S1 of the wall-plate 10, because in that case the wall plate 10 can be painted or wall paper can be provided in conventional manners. However, this is not essential.

There may be a reflective foil between the heating mat 1 and the isolation material 50 for redirecting heat radiation emitted at the inner-side S1

Fig. 1b shows a cross-sectional view of a metal-stud partition wall system in accordance with a second embodiment of the invention. Metal-stud partition walls are typically used for dividing larger spaces into smaller ones. The metal-stud profile is typically mounted to the floor and the ceiling, where after the isolation material 50, and wall plates 10 are provided in a similar manner as for metal stud cladding walls. In this case, however, wall plates 10 are provided on both sides of the metal-stud profile 50. The invention can be applied in such wall mutatis mutandis, i.e. the wall plate 10 needs to be replaced with the active wall element in accordance with the invention.

The active wall elements in Figs. 1 a and 1 b can be easily combined with the passive conventional wall plates. Such combination is attractive especially when a width of a wall is not an equal number times the width of the wall plate. In that case, for the edges which need to be cut, a conventional wall plate can be used.

More information about wall plates can be found in the following reference, which is hereby incorporated by reference in their entirety: *"Tabellenboek Bouwkunde",* Ten Hagenstan uitgeverij, 1^{e} druk 2000, ISBN 9044000969, chapter 11.5, page190.

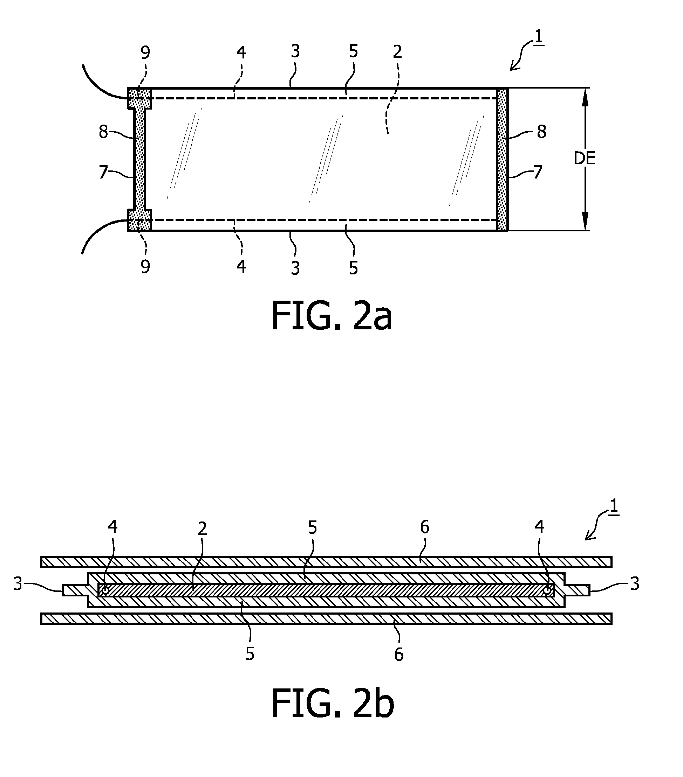

Fig. 2a shows a heating mat that can be used in the embodiments of Fig. 1 a and 1 b. Fig. 2b shows a cross-sectional view of the heating mat of Fig. 2a. It must be noted that the heating 1 mat illustrated in these figures is just an example. The invention is not limited to any kind of heating mat 1. The heating mat 1 in Fig. 2a comprises an electrically conductive polymer layer 2 which is provided with electrodes 4 on opposing side edges 3 thereof. These electrodes 4 are at least partially embedded in or on the polymer layer 2. Optionally, the polymer layer 2 is embedded in an electrically insulating layer 5. And also an extra, loosely engaged, layer 6 can be provided on top and underneath the mat 1. It must be noted that neither the electrically insulating layer 5 nor the extra layer 6 are essential to the invention. An insulating tape 8 can be provided over the cut end edges 7 of the heating mat 1, such that the electrodes 4 are better electrically isolated from the environment. Ends 9 of the electrode 4 are laid open to feature, in operational use, further connecting to other mats and the mains.

In case of the provision of the heating mat 1 on a conventional 600mm*2600mm wall plate 10 used in a metal-stud wall, the heating mat 1 is preferably about 500mm wide (margins are reserved for the metal-stud profiles 50. The electrodes are at an electrode distance DE of about 500mm in that case.

More information on the heating mat 1 of Figs. 2a and 2b is found in patent application publication WO 01/56333 A1 which is hereby incorporated by reference in its entirety. It must be also noted that this document does not disclose a wall heating system, but a floor heating system. It is the inventive contribution of the inventor to apply such heating mat 1 in a wall heating system. The use of an electrically conductive polymer heating mat 1 is very advantageous in wall heating system, because such heating mat 1 can be pinched through or drilled through without causing a safety hazard for the user. Also, the heating effect of such heating mat 1 is hardly affected by drilling such holes.

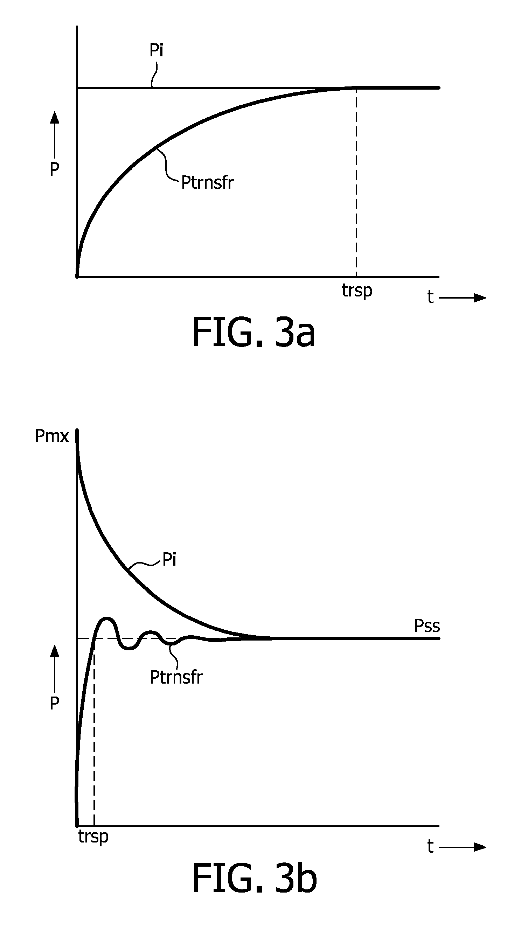

Figs. 3a and 3b show power transients of the active wall element of the invention, i.e. power P versus time t curves. Fig. 3a shows the transient behavior of the transferred power of the heating mat 1 in case the input power remains constant (after activation of the system). In the invention the input power is applied to the active wall element by causing a current to flow through the polymer layer 2 (controlling the current through the electrodes 4 or the voltage between the electrodes 4). The transient behavior of Fig. 3a complies with conventional heating systems. After activation of the heating system a constant input power Pi is provided to the heating mat 1. Consequently, the heating mat 10 heats up, i.e. the temperature will approach a steady-state temperature exponentially. Likewise, the transferred power Ptrnsfr (the power transferred by the heating mat 10 to the environment) follows a same exponential transient behavior. After a certain amount of time, i.e. the response time trsp, the transferred power Ptrnsfr has reached the steady-state value. It must be noted that in Fig. 3a and 3b the transition coefficient between the heating mat and the air has been taken into account. Fig. 3a clearly shows that the transferred power Ptrnsfr slowly responds to input power changes. Such behavior makes the system unsuitable for heating a space quickly. An embodiment of the invention conveniently provides a solution for this, of which the operation is illustrated in Fig. 3b.

Fig. 3b shows the transient behavior of the transferred power of the heating mat 1 in case the input power is optimized (in accordance with the invention) for short response time of the transferred power (after activation of the system). The input power Pi in Fig. 3b follows a curve having a very high peak Pmx right after activation which rapidly decreases towards a steady-state input power Pss. In an embodiment such peak input power Pmx may be more than 50 times, 100times, or even more than 150times the steady-state value. In case, the steady-state value is 100mW/m2, for example, the peak input power Pmx may reach values up to or even above 15kW/m2. Clearly, the response time trsp is significantly reduced. Experiments have shown that the response time trsp can be reduced from 20 minutes in the case of transient as in Fig. 3a towards well below one minute (down to 20seconds) in the case of a transient as in Fig. 3b. Fig. 3b only illustrates a possible input power transient. Many variations are possible. What is important is that, after activation of the system, at least during a predefined amount of time, the input power Pi is higher than a steady-state input power (Pss) corresponding with an equilibrium situation wherein a temperature of the heating mat 1 has settled on a desired value.

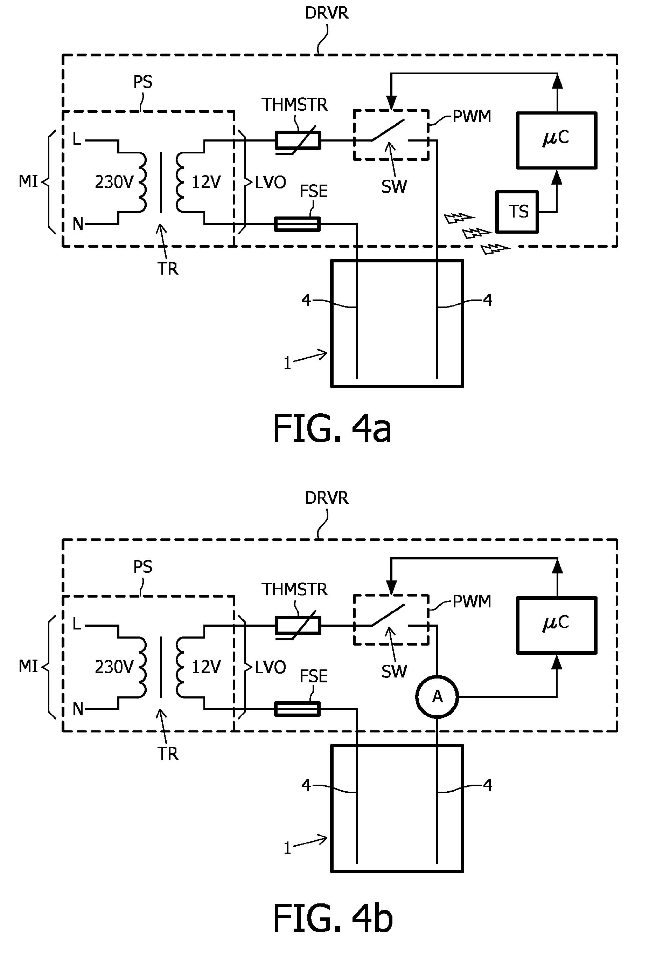

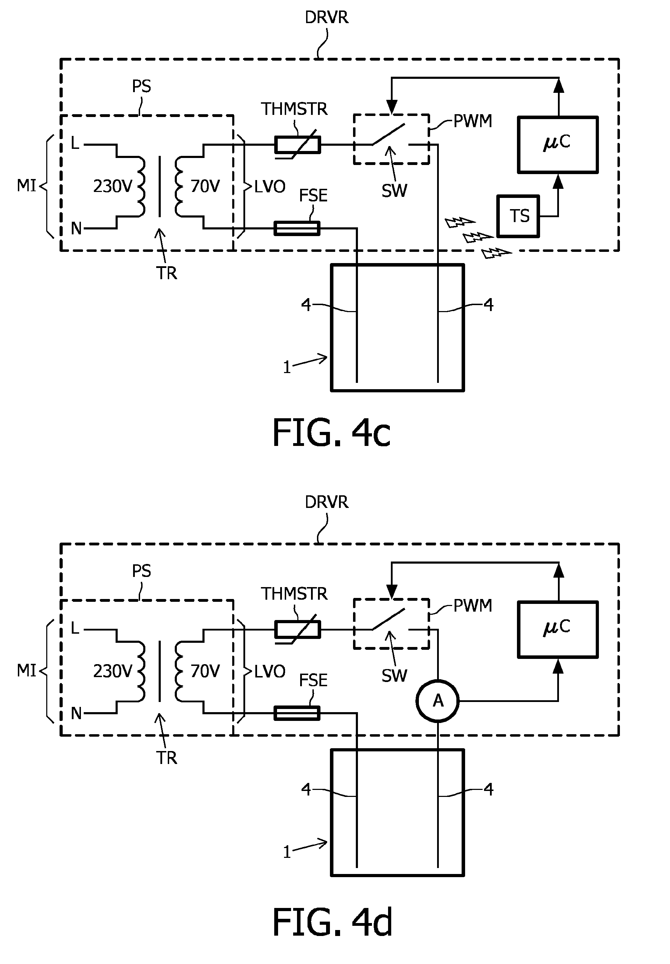

Figs. 4a to 4d show four different wall heating systems (comprising the active wall element) in accordance with different embodiments of the invention. All embodiments can be used to provide the effect as illustrated in Fig. 3b. Fig. 4a shows a wall heating system in accordance with a third embodiment of the invention. The system comprises an active wall element 1, 10 in accordance with the invention that is connected to a driver unit DRVR for steering the current through the heating mat 1. The driver unit DRV comprises a power supply PS having a mains input MI connected to mains in operational use, and further having a low-voltage output LVO for providing a low DC output voltage, for example 12V. In Figs. 4, the low output voltage is obtained using a power supply PS comprising a transformer TR and a rectifying circuit (not shown). In order to further comply with the NEN1010 part 6 standards fuse FSE and a thermistor THMSTR are provided on the low-voltage output LVO side of the power supply PS. The thermistor THMSTR has been added to limit the current through the heating mat 1 in case something goes wrong. The function of the thermistor THMSTR (which can be provided on the heating mat at several locations) is thermal protection (prevent overheating) of the heating mat 1 in case objects (such as cupboards) are placed against the wall.

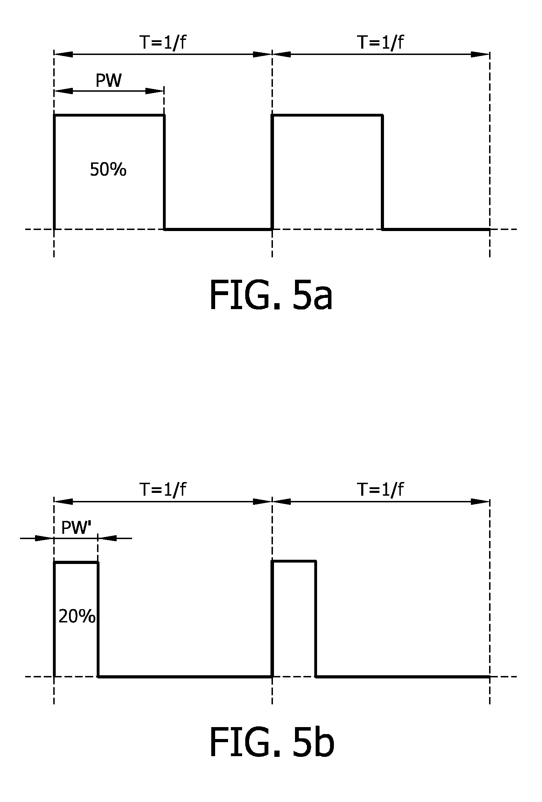

The output current of the power supply PS is pulse width modulated by a pulse width modulator PWM, which in this embodiment comprises a switching element SW that is controlled by a microcontroller µC. The microcontroller µC is configured for determining an actual value of the temperature of the heating mat 1 through a temperature sensor TS which is thermally coupled to the heating mat 1 (for example glued on a backside thereof). Pulse width modulation is a possible technique for modifying the input power Pi that is applied to the heating mat 1. The principle of pulse-width modulation is explained in more detail in Figs. 5a and 5b.

Fig. 4b shows a wall heating system in accordance with a fourth embodiment of the invention. The difference between this embodiment and the third embodiment is that, instead of directly measuring the temperature of the heating mat 1, the resistance of the heating mat 1 is determined. Electrically conductive polymer heating materials generally have a negative temperature coefficient in the temperature range around room temperature. In other words, an actual value of the resistance provides for a representative of the temperature, provided that the resistance-versus-temperature curve is known. Such information can be stored into the microcontroller µC, for example.

An alternative technique for determining the resistance of the heating mat 1 is to use a Wheatstone bridge configuration. Resistance measurements, and in particular Wheatstone bridges as such are considered to be well-known to the person skilled in the art.

It must be noted that control systems as such are considered to be well known to the person skilled in the art. The embodiments in Figs. 4a to 4d combined with the desired behavior as illustrated in Fig. 3b are considered to provide enough information for the person skilled in the art to build a working embodiment of wall heating system of the invention.

Fig. 4c shows a wall heating system in accordance with a fifth embodiment of the invention. Fig. 4d shows a wall heating system in accordance with a sixth embodiment of the invention. These embodiments differ from the embodiments of Figs. 4a and 4b, respectively, in that the output voltage of the power supply is higher, i.e. 70V in stead of 12V. This renders a much higher peak input power Pmx possible. In these embodiments, for the steady-state input power Pss a lower duty cycle can be used to obtain the same value as for Figs. 4a and 4b.

Figs. 5a and 5b illustrate the pulse width modulation principle. These figures serve to explain an embodiment of the invention more clearly. However, the driver unit for use in the wall heating system of the invention is not restricted to pulse width modulation. Pulse width modulation as such as a technique is known. The inventor has realized that in the application of wall heating such technique is very convenient to modify the input power for the heating mat. Pulse width modulation is a technique where an energy source with a fixed output power level is switched on during a predefined "on"-time (generally expressed in a percentage of a cycle period T), where after it is switched off., i.e. a pulse having a pulse width PW equal to the "on"-time is created. This sequence is then repeated at a predefined frequency f equal to 1/T. The longer the "on"-time the higher the average output power, i.e. the average output power may be varied by varying the on-time/pulse width. In Fig. 5a the pulse width is 50% of the cycle period T and in Fig. 5b the pulse width is 20% of the cycle period T. The average output power in Fig. 5a is therefore 2.5 times higher than in Fig. 5b (provided that output levels are the same during the pulse). The figures given in these examples are merely for illustration purpose only and do not reflect advantageous embodiments.

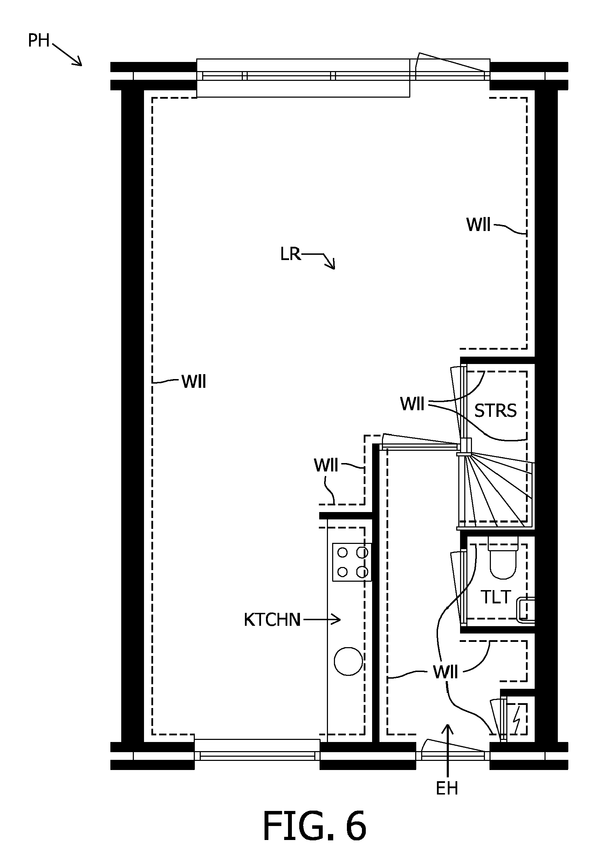

Fig. 6 shows which walls in a conventional room of a private house are suitable for being provided with the active wall element of the invention. The figure illustrates a building wherein the invention may be applied. In this example the building is a private house PH of which a floorplan of the ground floor has been illustrated. The ground floor of the private house PH comprises a living room LR, a kitchen KTCHN, an entrance hall EH, a toilet TLT, and stairs STRS leading towards the first floor (not shown). The dashed lines in Fig.6 illustrate walls WII where the wall heating system of the invention can be applied. It is not essential that the invention is applied everywhere, i.e. the large-area walls are particularly interesting. The more area is provided with the wall heating system in accordance with the invention the more accurately the temperature of the various spaces in the private house PH can be controlled (larger contact area with a fixed volume). It must be noted that the invention is not limited to private houses. It may be applied in any kind of building, including schools, libraries, churches, factories, shops, offices etc.

The invention thus provides an active wall element 1, 10 comprising: i) a wall plate 10, and ii) a heating mat 1 being physically attached to the wall plate 10, the heating mat 1 comprising an electrically conductive polymer layer 2, the heating mat 1 being provided in thermal contact with at least one side of the wall plate 10, wherein the heating mat 1 comprises two electrodes 4 configured for enabling current running through the electrically conductive polymer layer 2 to heat the wall plate 10 in operational use. The invention further provides a wall heating system comprising: i) the active wall element 1, 10 of the invention, and ii) a driver unit connected to the electrodes 4 and being configured for steering the current through the electrically conductive polymer layer 2. The active wall element, can be sold as an alternative for the existing passive wall elements, and is configured for heating a space in a building PH. Furthermore, the active wall element which is easy to mount. A special embodiment of wall heating system aims at reducing the response time of the system by using a smart driver unit. The invention also provides various applications of such wall heating system, and a method of manufacturing a building, in which active wall elements of the invention are used.

The invention may be applied in various application areas. For example, the invention may be applied in heating systems, in particular low-temperature heating systems (large area, low temperature difference and passive houses). The method in accordance with the invention can be applied by building constructors, handymen, and carpenters.

The invention is also applicable to metal-stud wall systems that are prepared for guiding cables, such as the Gyproc Cable Stud®. More information about this metal-stud wall system can be found on: http://www.gyproccablestud.nl/.

Various variations of the active wall element and the wall heating system in accordance with the invention are possible and do not depart from the scope of the invention as claimed. These variations for example relate to curved panels that can be used to heat spaces having curved walls

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

## Claims

1. An active wall element (1, 10) comprising:
- a wall plate (10), and
- a heating mat (1) being physically attached to the wall plate (10), the heating mat (1) comprising an electrically conductive polymer layer (2), the heating mat (1) being provided in thermal contact with at least one side of the wall plate (10), wherein the heating mat (1) comprises at least two electrodes (4) configured for enabling current running through the electrically conductive polymer layer (2) to heat the wall plate (10) in operational use.

2. The active wall element as claimed in claim 2, wherein the heating mat (1) substantially covers the wall plate (10).

3. The active wall element as claimed in claim 1 or 2, further comprises a reflective foil provided over the heating mat (1) for reflecting heat radiation of the heating mat (1) towards the wall plate (10).

4. A wall heating system comprising:
- the active wall element (1, 10) as claimed in any one of the preceding claims, and
- a driver unit (DRVR) connected to the at least two electrodes (4) and being configured for steering the current through the electrically conductive polymer layer (2).

5. The wall heating system as claimed in claim 4, wherein the driver unit (DRVR) is configured for, after activation of the wall heating system, providing an input power (Pi) to the heating mat (1), which is, at least during a predefined amount of time, larger than a steady-state input power (Pss) corresponding with an equilibrium situation wherein a temperature of the heating mat (1) has settled on a desired value.

6. The wall heating system as claimed in claim 5, wherein the driver unit (DRVR) is configured for providing, during the predefined amount of time, a peak input power (Pmx), which is at least 50 times the stead-state input power (Pss), and preferably at least 100 times the steady-state input power (Pss), and which is even more preferably at least 150 times the steady-state input power (Pss).

7. The wall heating system as claimed in claim 6, wherein the driver unit (DRVR) is configured for determining an actual value of temperature of the heating mat (1), and wherein the driver unit (DRVR) further comprises a controller (µC) for regulating the temperature towards the desired value of the temperature using the actual value.

8. The wall heating system as claimed in claim 7, wherein the driver unit further comprises a temperature sensor (TS) coupled to the controller (µC) and being arranged in thermal coupling with the heating mat (1) for determining the actual value of the temperature.

9. The wall heating system as claimed in claim 7, wherein the driver unit (DRVR) further comprises an impedance meter (A) configured for measuring a resistance between the at least two electrodes (4) of the heating mat (1) to obtain a representative of the actual value of the temperature, wherein the controller (µC) is configured for deriving the actual value of the temperature from the representative using a stored resistance-versus-temperature dependency.

10. The wall heating system as claimed in any one of claims 5 to 9, wherein the driver unit (DRVR) further comprises a pulse width modulator (PWM) for regulating the input power (Pi) by pulse width modulation of a voltage over the heating mat (1) or a current through the heating mat (1).

11. The wall heating system as claimed in any one of claims 4 to 10, further comprising a frame or a stud (50) configured for being mounted to a further wall (100) or ceiling, wherein the active wall element (1, 10) is attached to the frame or stud (50);

12. The wall heating system as claimed in any one of claims 4 to 11, wherein the active wall element (1, 10) is mounted such that the heating mat (1) located provided on an inner side (S1) of the wall plate (10), wherein the inner side (S1) is defined as the side of the wall plate (10) which is not directly accessible when the wall plate is mounted to or as a wall (100).

13. A wall (100, WII) comprising the wall heating system as claimed in any one of claims 4 to 12.

14. A building (PH) comprising the wall (100, WII) as claimed in claim 13.

15. A method of manufacturing a building (PH) comprising a room (LR, STRS, KTCHN, EH) with a wall (100, WII), the method comprising:
- providing the active wall element (1, 10) as claimed in any one of claims 1 to 4, or and
- mounting the active wall element (1, 10) to the wall (100, WII) for enabling heating of the room (LR, STRS, KTCHN, EH) in operational use of the building, PH).
